# EUROPEAN PATENT APPLICATION

(11) **EP 2 832 988 A1**
(43) Date of publication of application: **04.02.2015**
(21) Application number: 14178208.6
(22) Date of filing: 23.07.2014
(51) Int. Cl.: F03D 1/00, B66C 1/10

(54) **Method and apparatus for handling a rotor blade**

(30) Priority: 29.07.2013 US 201313952920
(71) Applicant: General Electric Company, Schenectady, New York 12345 (US)
(72) Inventor: Wubbelmann, Marcus Paul, 48499 Salzbergen (DE)
(74) Representative: Bedford, Grant Richard

(57) **Abstract**

Described herein is a blade holding device 100, 300 for handling the rotor blade 22 of a wind turbine 10, the rotor blade 22 including a root portion 24 and an outer portion 25. The blade holding device 22 comprising a first device 110, 310, 410 adapted to grip the root portion 24 of the rotor blade 22 and a second device 140, 340 adapted to support the outer portion 25 of the rotor blade 22.

## Description

The subject matter described herein relates generally to methods and systems for handling rotor blades, and more particularly, to methods and systems for holding and handling rotor blades of a wind turbine.

Wind energy harvested, for example, through the use of large scale wind turbines has experienced rapid growth in recent years. Sources of this growth may be the numerous environmental, technical and economic benefits related to wind generated energy production. Wind energy is widely available, renewable and reduces the production of greenhouse gases by diminishing the need of fossil fuels as energy source. Furthermore, technical developments have improved design, manufacturing technologies, materials and power electronic devices of wind turbines and will in the future continue to decrease production costs of wind turbines while increasing their energy production capabilities and efficiencies.

At least some known wind turbines include a tower and a nacelle mounted on the tower. A rotor is rotatably mounted to the nacelle and is coupled to a generator by a shaft. A plurality of blades extend from the rotor. The blades are oriented such that wind passing over the blades turns the rotor and rotates the shaft, thereby driving the generator to generate electricity.

Typically, wind turbines are transported to the site of their installation in a plurality of parts and then assembled on site. The transport may occur via transport vehicles or vessels over land (e.g. road and rail) and by sea. The wind turbines may then be erected at their destination in on- or offshore locations using the transport vehicle or vessel or by employing further heavy machinery, which is designed to lift large and heavy objects.

In general, the tower of a wind turbine is assembled first, followed by the nacelle and rotor, which typically includes a number of high-tech blades, a rotor hub and a spinner. Due to the length of the rotor blades these are typically connected to the hub at the end of the assembly process with a pitch mechanism interposed to allow the blade to rotate about its axis in order to take advantage of varying wind speeds.

In some known assembly processes the rotor blades, the rotor hub and spinner may be pre-assembled and lifted at the site of installation as a single piece using, for instance, multiple cranes. Alternatively, the rotor blades of a wind turbine may be lifted and attached to the rotor hub separately. In general however, lifting and balancing the bulky parts of a wind turbine is typically achieved using at least two main cranes. Similarly, for repairing or exchanging parts of a wind turbine or for its disassembly, typically more than one crane needs to be employed, especially, for handling the rotor blades. The costs involved in mobilizing and demobilizing these specialized cranes is typically very high. Moreover, at some wind turbine erection sites the assembly space may be very limited (e.g. in offshore or high altitude locations). Generally, accommodating two cranes on the same crane pad for assembling wind turbines with hub heights of up to 100 m may be difficult and employ high costs.

Individual blade installation may be achieved by using a single crane and specially adapted blade lifting systems for wind turbines with a hub height above 100 m, e.g. with a hub height of 139 m. These systems are typically relatively small and may be difficult to position on a rotor blade. Thus, safely handling the rotor blade during installation or de-installation may be very tough, especially in challenging weather conditions (e.g. at high wind speeds or wind gusts). In the art, attaching the lifting system in the correct position on a rotor blade may require lengthy adjustments procedures. Hence, known blade lifting systems may require a considerable amount of time to assemble or de-assemble wind turbines, which may substantially increase the costs when installing, for instance, multiple wind turbines in on- or offshore wind farms. Further, due to the increased difficulty level of handling a rotor blade with these blade lifting systems, safety issues may arise concerning the rotor blade itself or other wind turbine parts that may be damaged by handling the rotor blade when utilizing such blade lifting systems.

For this purpose, it will be appreciated that systems and methods to optimize the safe and easy handling of rotor blades of a wind turbine is desired. Hence, the subject matter described herein pertains to such methods and systems.

In view of the above, in one aspect according to the present invention a blade holding device for handling the rotor blade of a wind turbine, the rotor blade including a root portion and an outer portion is provided. The blade holding device including a first device adapted to grip the root portion of the rotor blade and a second device adapted to support the outer portion of the rotor blade.

In another aspect, a lifting system including at least one lifting machine, hoisting device and a blade holding device suspended via the hoisting device for handling the rotor blade of a wind turbine, the rotor blade including a root portion and an outer portion is provided. The blade holding device including a first device adapted to grip the root portion of the rotor blade and a second device adapted to support the outer portion of the rotor blade.

In yet another aspect, a method for handling the rotor blade of a wind turbine, the rotor blade including a root portion and an outer portion is provided. The method includes gripping the root portion of the rotor blade and supporting the outer portion of the rotor blade.

Various aspects, advantages and features of the present invention are apparent from the dependent claims, the description and the accompanying drawings, in which:
Fig. 1 is a perspective view of an exemplary wind turbine according to embodiments described herein.
Fig. 2 is an enlarged sectional view of a portion of the wind turbine shown in Fig. 1.
Fig. 3 is a schematic view of a rotor blade and the blade holding device according to embodiments described herein.
Fig. 4 is a schematic view of the blade holding device according to embodiments described herein.
Fig. 5 is a schematic view of the blade holding device according to embodiments described herein.
Fig. 6 is a schematic view illustrating exemplarily the gripping of a rotor blade with the blade holding device according to embodiments described herein.
Fig. 7 is a schematic view of the blade holding device aligned with a rotor blade according to embodiments described herein.
Fig. 8 is a schematic view illustrating exemplarily the gripping of a rotor blade with the blade holding device according to embodiments described herein.
Fig. 9 is a schematic view showing the blade holding device and a rotor blade according to embodiments described herein.
Fig. 10 is a schematic view of a part of the blade holding device according to embodiments described herein.
Fig. 11 is a schematic view of a part of the blade holding device according to embodiments described herein.
Fig. 12 is a schematic view illustrating exemplarily the gripping of a rotor blade with the blade holding device according to embodiments described herein.
Fig. 13 is a schematic view of a part of the blade holding device in a closed conformation according to embodiments described herein.
Fig. 14 is a schematic view of a part of the blade holding device in a closed conformation according to embodiments described herein.
Fig. 15 is a schematic view of a part of the blade holding device in an open conformation according to embodiments described herein.
Fig. 16 is a schematic view of the blade holding device with a rotor blade according to embodiments described herein.
Fig. 17 is a schematic view of the blade holding device with a rotor blade according to embodiments described herein.
Fig. 18 is a schematic view illustrating exemplarily a portion of the process for assembling a wind turbine using the blade holding device according to embodiments described herein.
Fig. 19 is an enlarged sectional view of the wind turbine and the blade holding device shown in Fig. 18.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

In general, it will be appreciated that providing a safe, simple and accurate handling of wind turbine rotor blades for their installation and de-installation is desired. Moreover, reducing the total number of cranes employed in the assemblage of a wind turbine rotor is desired to substantially reduce installation, de-installation and maintenance costs of a wind turbine or wind farm and also in order to meet the space limitations at some wind turbine installation sites. The embodiments described herein include a device, system and method that enable the aforementioned easy, efficient, safe and precise handling of individual rotor blades of a wind turbine, typically allowing to employ a single crane throughout the entire assembly process.

More specifically, the center of gravity of the device for handling rotor blades according to the embodiments described herein may align automatically to the center of gravity of a rotor blade, which makes the handling of rotor blades very easy and safe. Further, the handling of rotor blades may be facilitated since the torque for handling the rotor blade will be around the center of gravity of both the device and the rotor blade. Furthermore, the device for handling rotor blades may be designed to be very compact both for transport and use. Such a compact design may ensure a safe clearance distance between the wind turbine and the device for handling rotor blades during maintenance or assembly and dis-assembly processes. This may be of particular importance since the height to release a blade at the hub of a wind turbine may be limited.

The devices for holding rotor blades according to embodiments described herein may be assembled and dis-assembled on site using a single crane and are normally designed to have a low cost of manufacture and maintenance. Further, the specialized construction and design of the devices described herein may warrant a positive control on the rotor blade at all times before release and provide a high degree of airfoil or rotor blade protection.

As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

As used herein, the term "root portion" of a rotor blade is intended to be representative of the end region of a rotor blade, which may be connected to the rotor hub of a wind turbine. In embodiments described herein, the root portion of a rotor blade may, for instance, be the flange of a rotor blade that may be used to connect the rotor blade to the rotor hub of a wind turbine. The root portion according to embodiments herein may also be defined as the region extending anywhere from the flange of the rotor blade (root), which connects the rotor blade to the rotor hub of a wind turbine, to 200 cm, in particular to 100 cm, in a direction along the longitudinal axis of the rotor blade towards the center of gravity of the rotor blade. The root portion of a rotor blade does not include the center of gravity of the rotor blade. As used herein, the term "tip section" of a rotor blade is intended to be representative of the region or section of a rotor blade extending from its center of gravity in a direction along the longitudinal axis of the rotor blade towards the tip of the rotor blade, which is generally at an opposite end of the rotor blades root portion. Hereinafter, the term tip section may be used interchangeably with the term outer section or outer portion of a rotor blade. Typically, as used herein, the term "blade holding device" may be used interchangeably with the term "single blade lifting tool (SLT)".

As used herein, the term "inner gripper" is intended to be representative of a clamping device, which is adapted to grip the root portion of a rotor blade. Hereinafter, the term first device may be used interchangeably with the term inner gripper. As used herein, the term "outer gripper" is intended to be representative of a support or clamping device, which is adapted to support the rotor blade or grip the tip section of a rotor blade. Hereinafter, the term second device may be used interchangeably with the term outer gripper.

As used herein, the term "lifting machine" is intended to be representative of any machine capable of hoisting heavy and bulky objects such as a rotor blade. Typical examples of such machines are cranes in their various implementations such as track-bound cranes, truck cranes or cranes on marine vessels. As used herein, the term "hoisting device" is intended to be representative of any number of lifting chains, cables and tag lines that may be used to suspend the blade holding device from a lifting machine. Hereinafter, the term hoisting device may be used interchangeably with the term hoisting means.

The embodiments described herein include blade holding devices for handling rotor blades of a wind turbine. Typically, such blade holding devices may be employed during the installation, maintenance or de-installation of wind turbines. More specifically, the blade holding devices described herein may be capable of gripping the rotor blade of a wind turbine in such a way that the center of gravity of the rotor blade automatically aligns vertically with the center of gravity of the blade holding device. The blade holding devices may simply grip the root portion of a rotor blade of known length and thereby warrant an automatic alignment of the centers of gravity of the rotor blade and the blade holding device. This allows for a simple, balanced, controlled and rapid consecutive handling of rotor blades.

The blade holding device according to embodiments herein is designed with a minimal amount of moving parts and adapted to grip the rotor blade of a wind turbine at the cylindrical root portion. Typically, the root portion of a rotor blade has diameters in the range from 1000 mm to 4000 mm, more specifically from 2000 mm to 3000 mm, even more specifically from 2400 to 2600 mm.

The root portion of rotor blades may be thicker and constructed to withstand greater bending forces close to the rotor hub. Hence, the root portion may be gripped by the blade holding device according to embodiments herein using relatively large frictional forces (e.g. force-fitting by using a hydraulic mechanism) without any risk of damaging the rotor blade.

According to embodiments herein, the blade holding device may further support the rotor blade beyond the center of gravity and aerodynamic point of the blade in a direction opposite from the cylindrical root portion. Optionally, the blade holding device may also grip a portion of the rotor blade located beyond its center of gravity towards the tip of the rotor blade.

The root portion and the portion of the rotor blade towards the tip passed the center of gravity of the rotor blade may be gripped or clamped by the blade holding device using gravity as clamping force. The weight of the rotor blade and the downward pull of gravity towards the earth's surface may create a clamping force that allows the rotor blade to be clamped or fixed safely and securely, thus ensuring that it will not come loose even in strong winds.

Such a fail-safe clamping or locking mechanism may be used in addition or alternatively to, for instance, a hydraulically activated gripping or clamping mechanism of the blade holding device according to embodiments herein. Both, form-and force-fitting mechanisms may be employed by the blade holding devices described herein in order to securely grip the rotor blade of a wind turbine.

According to some embodiments, the blade holding device may be self-sustaining by utilizing a redundant power supply (e.g. using two separate generators for powering the hydraulic and electronic systems of the blade holding device). The fail-safe mechanism as described above ensures that in cases of hydraulic failure, the rotor blade may still be securely clamped by the blade holding device.

In embodiments described herein, the blade holding device may include a first device adapted to grip the root portion of a rotor blade (herein also referred to as inner gripper). Further, the blade holding device may include a second device adapted for supporting the rotor blade. The second device usually holds or optionally also grips the rotor blade in a region between the center of gravity of the rotor blade and the tip of the rotor blade (herein also referred to as outer gripper). Thus, for instance, at least one of the first device and second device may be designed as a support bar, gripper, pincer or claw, which may for example include multi-jointed arms and pressure exerting means such as pressure pads or plates that may enclose the root portion of a rotor blade or a region between the center of gravity and the tip of the rotor blade. According to embodiments herein, the outer gripper may contact the rotor blade for supporting or gripping the rotor blade at a position anywhere from 2/5 to 4/5 of the axial length of the rotor blade starting from the end of the rotor blade, which connects the rotor blade to the rotor hub of a wind turbine. For instance, the outer gripper may contact the rotor blade at a position 2/3 the axial length of the rotor blade starting from the end of the rotor blade, which connects the rotor blade to the rotor hub of a wind turbine. In particular, the outer gripper may contact the rotor blade in a region, which is between 29 m and 44 m or between 33 m and 36 m from the root flange of a rotor blade.

In embodiments herein, typically the blade holding device may include a spreader, spreader bar or lifting frame. The spreader may have a length that is at least equal or greater than the distance between the root portion of the rotor blade and the center of gravity of the rotor blade. The length of the spreader may be adjustable and anywhere from about 2/5 to 4/5 the length of the rotor blade intended to be lifted with the blade holding device. For instance, the length of the spreader may be 1/2 or 2/3 the length of the rotor blade intended to be lifted with the blade holding device. Exemplarily according to embodiments described herein, the spreader may have a length anywhere from 10 m to 50 m, in particular from 20 m to 40 m, e.g. 30 m or 32 m. The first device and second device are connected to the spreader. Typically, at least one of the first device and second device may be rotatably connected to the spreader, i.e. the devices may rotate in the x, y and z directions of a typical Cartesian coordinate system with respect to the spreader.

According to embodiments herein, at least the first device and second device are connected to an end or to opposite ends of the spreader. Optionally, in order to change the distance between the first device and the second device the spreader may be adjustable along its axial length. This, for instance, may allow the blade holding device to be used with rotor blades of different lengths, such as rotor blades with a length from 30 m to 70 m, or rotor blades with, for instance, a length of 48.7 m, 50.2 m and 58.2 m. Thus, the adjustable blade holding device as described herein ensures the same safe and stable handling of rotor blades with different lengths without lengthy exchanges or recalibrations of the blade holding device.

At least one of the first device and second device may include non-marking rubber-coating of those parts that are in contact with the surface of the rotor blade to ensure securing the rotor blade without damaging its surface and to warrant a firm grip even in wet weather conditions. Further, the grippers may be adapted to allow an easy exchange of parts without the use of tools. For instance, the grippers may be designed such that specialized pressure plates may installed whenever necessary to enable the assembly and dis-assembly of iced-over rotor blades in colder weather conditions. Furthermore, the materials used for the first and second device, especially the coated parts, may include photostable and age-resistant materials.

Optionally, those parts of the at least first device and second device that are in contact with the surface of a rotor blade (e.g. the pressure plates) may be gimbal-mounted to the blade holding device in order to easily adapt to the shape of the rotor blade and thus facilitate the gripping or release of the rotor blade.

In embodiments described herein, those parts of the at least first device and second device that are in contact with the surface of a rotor blade (e.g. the pressure-plates) may be guided to clamp the rotor blade correctly by a guiding mechanism. For instance, the guiding mechanism may be a sling which may be a reference for the pressure pads to push on the right location of the rotor blade. Optionally, sensors may be in place in order to monitor and also provide the above-mentioned function of a guiding mechanism.

According to embodiments described herein at least one of the first device and second device may include counterweights that allow to adjust their centers of gravity in order, for instance, to be vertically aligned with the center of gravity of the rotor blade. The counterweights may allow the blade holding device to be stable when handling a rotor blade and also when the blade holding device is moved without holding a rotor blade.

In embodiments described herein, the blade holding device may include a roll or slipping mechanism adapted to enable the rotor blade to rotate around its longitudinal axis when held by the blade holding device. For instance, the blade holding device may include rollers arranged between at least one of the first device and second device, and the rotor blade. This roll or slipping mechanism enables the wind attack surface of the rotor blade to be kept as small as possible. The roll or slipping mechanism may enable the rotor blade to be rotated around its longitudinal axis in the blade holding device to minimize the wind attack surface, which may further help to stabilize the rotor blade in the blade holding device ensuring a safe assembly and disassembly of rotor blades even at higher wind speeds or wind gusts.

Moreover, higher wind speeds may shift the center of gravity of a rotor blade due to the lift and down forces acting on the rotor blade. This may negatively affect the overall control and precision for handling a rotor blade during assembly and disassembly processes. Thus, rotating the rotor blade held by the blade holding device according to embodiments herein ensures that the center of gravity of the rotor blade and the center of gravity of the blade holding device are aligned vertically, thereby warranting a controlled handling of wind turbine rotor blades even at higher wind speeds.

The roll or slipping mechanism may be powered so as to allow a controlled rotation of the rotor blade along its longitudinal axis. In embodiments herein, the roll or slipping mechanism may be unidirectional or bidirectional and remote-controllably so as to be controlled from, for instance, a ground or nacelle crew.

In embodiments herein, the blade holding device may be connected to a lifting machine such as crane via, for instance, an adjustable tag line. This permits to handle the rotor blade using a single hoisting point. The tag line may be connected to the spreader of a blade handling device described herein via, for example, an adjustable chain set or adjustable steering lines such as four-way chains. In the embodiments described herein such adjustable chain sets and steering lines may be part of the hoisting device. The points of connection between the chain set and the spreader may be adjusted before or during the handling of a rotor blade with the blade holding device in order to, for example, align the hoisting point with the center of gravity of the blade holding device and the center of gravity of the rotor blade held by the blade holding device. The chain angle may be anywhere from 30° to 90° from the horizontal. For instance, it may be from 45° to 75° or from 55° to 65° from the horizontal. Such a lifting system, for instance, allows the rotor blade and the blade holding device to be calibrated into a horizontal position for an easy and secure handling of a rotor blade.

In embodiments herein and as described above, the blade holding device may be remote-controlled using a control system with one or more transmitters. The control system may send and display operating modes and real-time information from sensors and visual aids (e.g. video cameras) included in the blade holding device to both the nacelle and ground crew during assembly of a wind turbine. The sensors may, for instance, indicate to the user the correct and safe clamping or gripping of the rotor blade.

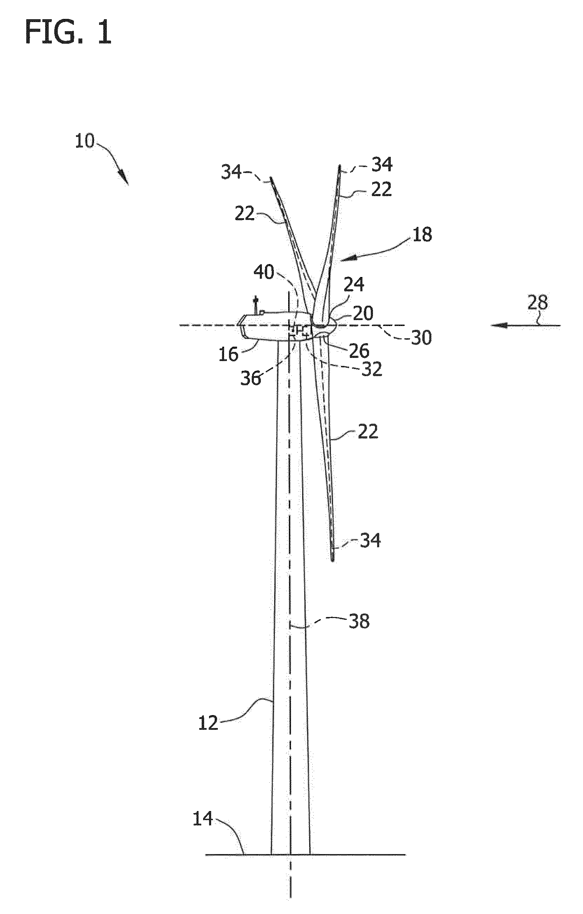

Fig. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Fig. 1) between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Fig. 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other nonlimiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In the exemplary embodiment, control system 36 is shown as being centralized within nacelle 16, however, control system 36 may be a distributed system throughout wind turbine 10, on support system 14, within a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

Controllers described herein may be real-time controllers that include any suitable processor-based or microprocessor-based system, such as a computer system, that includes microcontrollers, reduced instruction set circuits (RISC), application-specific integrated circuits (ASICs), logic circuits, and/or any other circuit or processor that is capable of executing the functions described herein. In one embodiment, the controller may be a microprocessor that includes read-only memory (ROM) and/or random access memory (RAM), such as, for example, a 32 bit microcomputer with 2 Mbit ROM, and 64 Kbit RAM. As used herein, the term "real-time" refers to outcomes occurring a substantially short period of time after a change in the inputs affect the outcome, with the time period being a design parameter that may be selected based on the importance of the outcome and/or the capability of the system processing the inputs to generate the outcome.

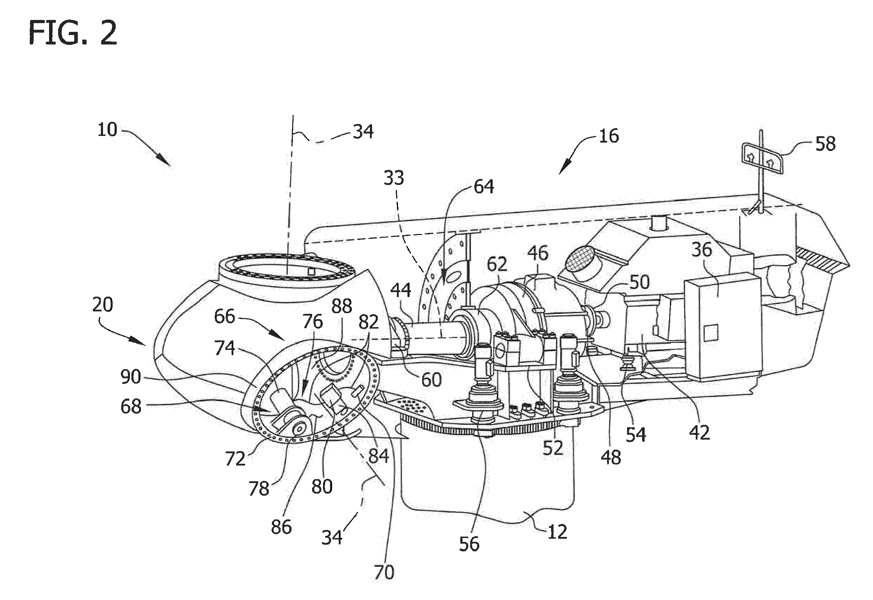

Fig. 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 33. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Fig. 1) to control the perspective of rotor blades 22 with respect to direction 28 of the wind. Nacelle 16 also includes at least one meteorological mast 58 that includes a wind vane and anemometer (neither shown in Fig. 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

In the exemplary embodiment, hub 20 includes a pitch assembly 66. Pitch assembly 66 includes one or more pitch drive systems 68 and at least one sensor 70. Each pitch drive system 68 is coupled to a respective rotor blade 22 (shown in Fig. 1) for modulating the blade pitch of associated rotor blade 22 along pitch axis 34. Only one of three pitch drive systems 68 is shown in Fig. 2.

In the exemplary embodiment, pitch assembly 66 includes at least one pitch bearing 72 coupled to hub 20 and to respective rotor blade 22 (shown in Fig. 1) for rotating respective rotor blade 22 about pitch axis 34. Pitch drive system 68 includes a pitch drive motor 74, pitch drive gearbox 76, and pitch drive pinion 78. Pitch drive motor 74 is coupled to pitch drive gearbox 76 such that pitch drive motor 74 imparts mechanical force to pitch drive gearbox 76. Pitch drive gearbox 76 is coupled to pitch drive pinion 78 such that pitch drive pinion 78 is rotated by pitch drive gearbox 76. Pitch bearing 72 is coupled to pitch drive pinion 78 such that the rotation of pitch drive pinion 78 causes rotation of pitch bearing 72. More specifically, in the exemplary embodiment, pitch drive pinion 78 is coupled to pitch bearing 72 such that rotation of pitch drive gearbox 76 rotates pitch bearing 72 and rotor blade 22 about pitch axis 34 to change the blade pitch of blade 22.

Pitch drive system 68 is coupled to control system 36 for adjusting the blade pitch of rotor blade 22 upon receipt of one or more signals from control system 36. In the exemplary embodiment, pitch drive motor 74 is any suitable motor driven by electrical power and/or a hydraulic system that enables pitch assembly 66 to function as described herein. Alternatively, pitch assembly 66 may include any suitable structure, configuration, arrangement, and/or components such as, but not limited to, hydraulic cylinders, springs, and/or servo-mechanisms. Moreover, pitch assembly 66 may be driven by any suitable means such as, but not limited to, hydraulic fluid, and/or mechanical power, such as, but not limited to, induced spring forces and/or electromagnetic forces. In certain embodiments, pitch drive motor 74 is driven by energy extracted from a rotational inertia of hub 20 and/or a stored energy source (not shown) that supplies energy to components of wind turbine 10.

Pitch assembly 66 also includes one or more overspeed control systems 80 for controlling pitch drive system 68 during rotor overspeed. In the exemplary embodiment, pitch assembly 66 includes at least one overspeed control system 80 communicatively coupled to respective pitch drive system 68 for controlling pitch drive system 68 independently of control system 36. In one embodiment, pitch assembly 66 includes a plurality of overspeed control systems 80 that are each communicatively coupled to respective pitch drive system 68 to operate respective pitch drive system 68 independently of control system 36. Overspeed control system 80 is also communicatively coupled to sensor 70. In the exemplary embodiment, overspeed control system 80 is coupled to pitch drive system 68 and to sensor 70 with a plurality of cables 82. Alternatively, overspeed control system 80 is communicatively coupled to pitch drive system 68 and to sensor 70 using any suitable wired and/or wireless communications device. During normal operation of wind turbine 10, control system 36 controls pitch drive system 68 to adjust a pitch of rotor blade 22. In one embodiment, when rotor 18 operates at rotor overspeed, overspeed control system 80 overrides control system 36, such that control system 36 no longer controls pitch drive system 68 and overspeed control system 80 controls pitch drive system 68 to move rotor blade 22 to a feathered position to slow a rotation of rotor 18.

A power generator 84 is coupled to sensor 70, overspeed control system 80, and pitch drive system 68 to provide a source of power to pitch assembly 66. In the exemplary embodiment, power generator 84 provides a continuing source of power to pitch assembly 66 during operation of wind turbine 10. In an alternative embodiment, power generator 84 provides power to pitch assembly 66 during an electrical power loss event of wind turbine 10. The electrical power loss event may include power grid loss, malfunctioning of the turbine electrical system, and/or failure of the wind turbine control system 36. During the electrical power loss event, power generator 84 operates to provide electrical power to pitch assembly 66 such that pitch assembly 66 can operate during the electrical power loss event.

In the exemplary embodiment, pitch drive system 68, sensor 70, overspeed control system 80, cables 82, and power generator 84 are each positioned in a cavity 86 defined by an inner surface 88 of hub 20. In a particular embodiment, pitch drive system 68, sensor 70, overspeed control system 80, cables 82, and/or power generator 84 are coupled, directly or indirectly, to inner surface 88. In an alternative embodiment, pitch drive system 68, sensor 70, overspeed control system 80, cables 82, and power generator 84 are positioned with respect to an outer surface 90 of hub 20 and may be coupled, directly or indirectly, to outer surface 90.

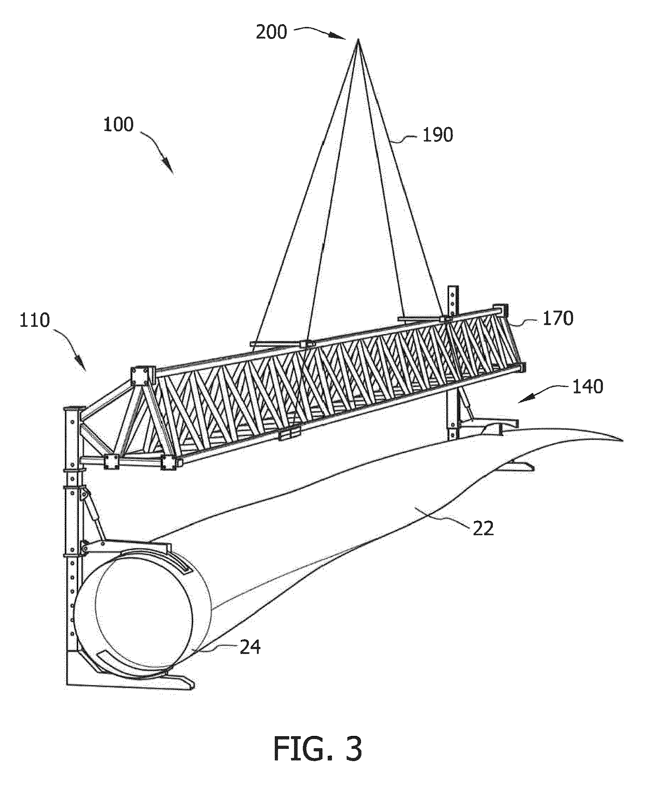

Fig. 3 shows blade holding device 100 and the rotor blade 22 of a wind turbine according to embodiments herein. Blade holding device 100 includes an inner gripper 110 (first device), which grips a root portion 24 of the rotor blade 22. Further, in the exemplary embodiment shown in Fig. 3, the blade holding device 100 includes an outer gripper 140 (second device) for supporting and optionally gripping the rotor blade 22. In embodiments described herein, the outer gripper 140 grips the rotor blade somewhere between the center of gravity and tip of the rotor blade. Measured by starting from the root portion of the rotor blade, the outer gripper may grip the rotor blade anywhere between 1/2 and 2/3 the length of the rotor blade.

In the exemplary embodiment, the blade holding device 100 includes a spreader 170 to which the inner gripper 110 and outer gripper 140 are connected. The inner gripper 110 and outer gripper 140 are connected to the ends of the spreader 170, even though they may also be connected anywhere along the axial length of the spreader 170. The inner gripper and outer gripper may be rotatably connected to the spreader.

In embodiments described herein, the spreader, root and outer gripper may be transported to the wind turbine site as separate parts and assembled on site using a single crane. This allows the blade holding device to be easily transported from one site to another.

In embodiments herein, the spreader may be a truss which optionally includes a modular structure with, for instance, three distinct sections. Typically, at least one of these sections is replaceable with a section being of a different length. For example, the root section and the mid-section of the spreader that correspond to the root section and mid-section of a rotor blade respectively, may be the same length irrespective of the length of the rotor blade. However, the tip section of the spreader that corresponds to the tip section of a rotor blade may be chosen to fit the particular length of the rotor blade in question. In further embodiments herein, the spreader may be designed to be telescopically adjustable in its axial length. Thereby, the same spreader may be adjustable to handle rotor blades of different lengths without exchanging any parts of the spreader.

In the exemplary embodiment shown in Fig. 3, blade holding device 100 may be suspended from a lifting machine (not shown in the figure) via hoisting device 190 (e.g. a chain set). The lifting machine may then raise or lower the blade holding device 100 and rotor blade 22 using a single hoist point 200. In embodiments described herein, the hoisting means may be adjustably connected to the spreader of the blade holding device. Particularly, the attachment points of, for example, lifting chains to the spreader of a blade holding device may be adjusted before or whilst handling a rotor blade. For the purpose thereof, the spreader may include specialized rails (not shown in the figure), which may allow the attachment points of the lifting chains to slide along the axial length of the spreader and be fixed at a predetermined position.

Typically, the centers of gravity of the rotor blade and the blade holding device do not need to be re-aligned since the blade holding device according to embodiments herein grips the rotor blade at a root portion and supports or optionally grips the rotor blade in a tip section, which automatically results in their centers of gravity being vertically aligned. However, re-adjusting the attachment points of the hoisting means on the spreader of a blade holding device according to embodiments herein allows for correcting, for instance, any gripping tolerance of the root and outer gripper with respect to the rotor blade. Adjustable hoisting means may facilitate calibrating the blade holding device and rotor blade for a safe and well-balanced horizontal hoisting of the rotor blade.

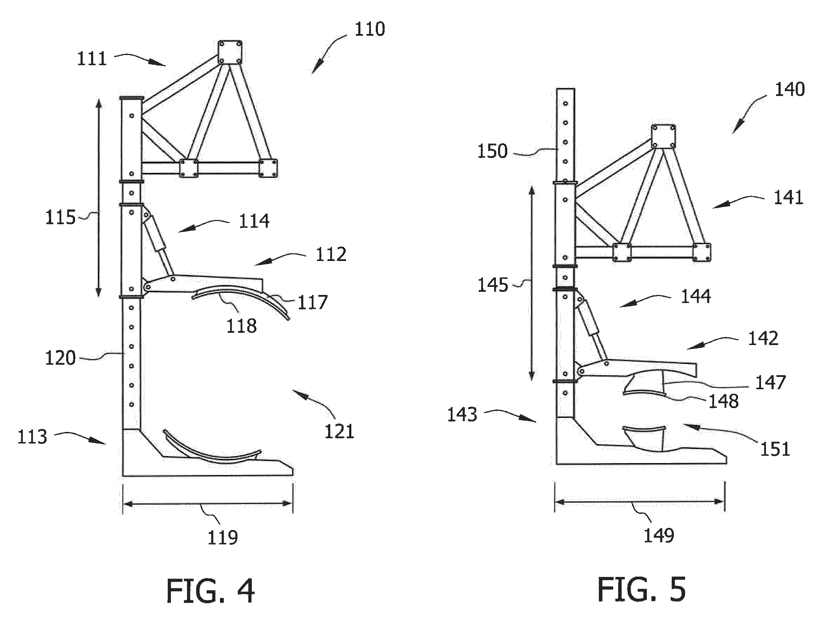

Fig. 4 shows an inner gripper 110 according to embodiments herein. Inner gripper 110 may include a spreader interface 111 and two arms interconnected by a connecting bar 120 for clamping the root portion of a rotor blade. At least one of these arms may be a clamping arm 112 and the other a rigid arm 113. The rigid arm may be adapted to support and carry the weight of a rotor blade, whereas the clamping arm may be adapted to exert a clamping force to clamp the root portion of a rotor blade safely in a fixed position. In order to accommodate root portions of rotor blades with different diameters and shapes, the clamping arm may typically be moveable 115 along connecting bar 120. The clamping arm 112 may be moveable towards and away from rigid arm 113 along connecting bar 120. According to embodiments herein, both arms may be moveable in order to facilitate clamping the rotor blade of a wind turbine.

In embodiments herein, a force exerting mechanism such as a hydraulic mechanism 114 may provide enough force to clamping arm 112 in order to securely clamp the root portion of a rotor blade. The hydraulic mechanism 114 may further be adapted to pull back the clamping arm 112 in a direction towards the connecting bar 120. This may increase the opening 121 between the clamping arm 112 and the rigid arm 113 for more easily clamping and releasing the root portion of a rotor blade without damaging (e.g. scratching) the surface of the rotor blade.

At least one of the clamping arm and rigid arm may include form-fitting means to securely clamp the root portion of a rotor blade. In the exemplary embodiment, the form-fitting means 117 may be designed as pressure pads. The form-fitting means or pressure pads may be moveably mounted (e.g. gimbal-mounted) to the clamping arm in order to conform to the shape of the root portion of a rotor blade.

The form-fitting means 117 may include a lining 118, such as non-mark rubber in order to securely clamp the root portion of a rotor blade. The material used for the lining 118 may be photostable and age-resistant. Furthermore, the material may, for instance, include polymer films that are grease, dirt or mud, ice and water repelling.

In embodiments herein, the form-fitting means 117 may be exchangeable with form-fitting means that are specially adapted to the shape of the root portion of a rotor blade or that have a modified surface to increase the friction between the fitting-means and the surface of the root portion of a rotor blade in order to warrant a secure clamping of the rotor blade.

The spreader interface 111 described in embodiments herein may be moveable 115 with respect to the connecting bar 120. This, for instance, allows the clearance space between the spreader and the rotor blade to be adjusted, which may ensure a horizontal orientation of the rotor blade when clamped by the inner gripper 110 and supported (or optionally clamped) by the outer gripper 140.

Fig. 5 shows an outer gripper 140 according to embodiments herein. Outer gripper 140 may have a similar design as inner gripper 110. Outer gripper 140 may include a spreader interface 141 and two arms interconnected by a connecting bar 150 for supporting or optionally gripping the tip of a rotor blade. At least one of these arms may be a clamping arm 142 that is moveably attached to the connecting bar 150 and the other may be a rigid arm 143 that is fixed to the connecting bar 150. Similar to the inner gripper, the rigid arm of the outer gripper may be adapted to support and carry the weight of a rotor blade, whereas the clamping arm may exert a clamping force to clamp the rotor blade safely in a fixed position. In order to accommodate the tip of rotor blades with different diameters and shapes, the clamping arm may typically be moveable 145 along connecting bar 150. The clamping arm 142 may be moveable towards and away from rigid arm 143 along connecting bar 150. According to embodiments herein, both arms may be moveable in order to facilitate clamping the rotor blade of a wind turbine.

In embodiments herein, a force exerting mechanism such as a hydraulic mechanism 144 may provide enough force to clamping arm 142 in order to securely clamp the tip section of a rotor blade. The hydraulic mechanism 144 may be adapted to pull back the clamping arm 142 in a direction towards the connecting bar 150 in order to increase the opening 151 between the clamping arm 142 and the rigid arm 143 for more easily clamping and releasing the tip of a rotor blade without damaging (e.g. scratching) the surface of the rotor blade.

At least one of the clamping arm and rigid arm may include form-fitting means to securely clamp the tip of a rotor blade. The form-fitting means 147 may be designed as pressure pads. For instance, the form-fitting means of the outer gripper may be wider than the form-fitting means of the inner gripper in order to ensure a greater force distribution of the form-fitting means on the surface of the more fragile tip section of a rotor blade. The form-fitting means or the pressure pads may be moveably mounted (e.g. gimbal-mounted) to the clamping arm in order to conform to the shape of the tip of a rotor blade.

Similarly to the form-fitting means of the inner gripper, form-fitting means 147 may include a lining 148, such as non-mark rubber in order to securely clamp the root portion of a rotor blade. The material used for the lining 148 may be photostable and age-resistant. Furthermore, the material may, for instance, include polymer films that are grease, dirt or mud, ice and water repelling.

In embodiments herein, the form fitting-means 147 may be exchangeable with form-fitting means that are specially adapted to the shape of the root portion of a rotor blade or that have a modified surface to increase the friction between the form-fitting means and the surface of the root portion of a rotor blade in order to warrant a secure clamping of the rotor blade.

The spreader interface 141 described in embodiments herein may be moveable 145 with respect to the connecting bar 150. This, for instance, may allow the clearance space between the spreader and the rotor blade to be adjusted, which may facilitate a horizontal orientation of the rotor blade when clamped by the inner gripper 110 and outer gripper 140.

In the embodiments described herein, the width of the root and outer grippers may be designed to be easily transportable. Thus, the width of the rigid arm 119 and 149 may, for example, be anywhere between 1000 mm and 4000 mm, more specifically 2000 mm and 3000 mm, even more specifically for instance 2525 mm.

The blade holding device according to embodiments described herein may be transported as modular system including, for instance, a spreader with three separate parts, the inner gripper and outer gripper. This modular construction enables an easy transport and rapid assembly of the blade holding device at the wind turbine installation site.

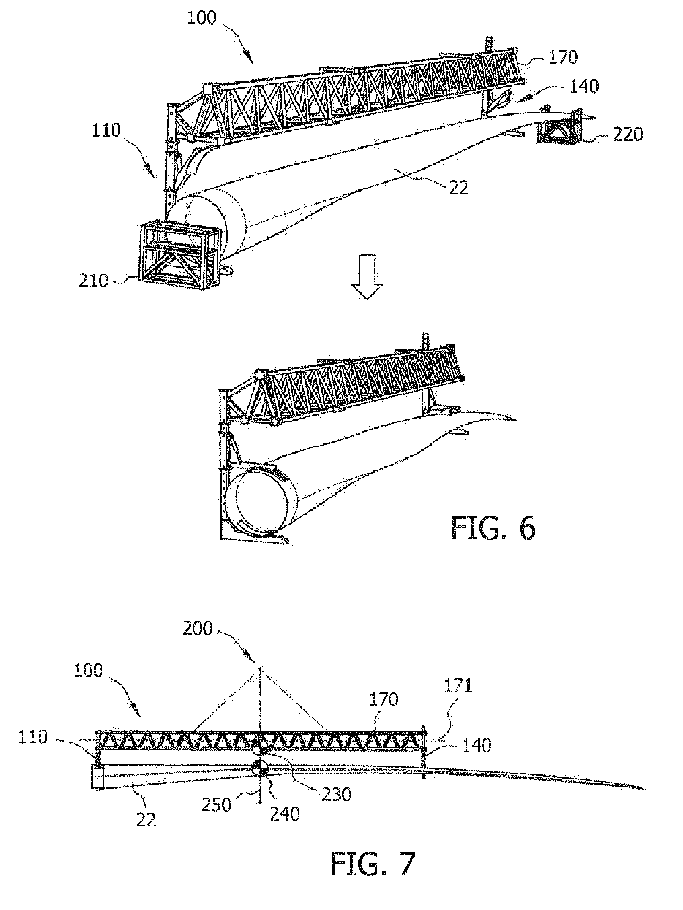

Fig. 6 shows exemplarily the gripping of a rotor blade 22 with the blade holding device 100 according to embodiments herein. During transportation, the rotor blade 22 of a wind turbine may include transport fixtures 210 and 220. The transport fixtures may secure the rotor blade to the transport vehicle and thus minimize the risk of damaging the rotor blade during transport to the site of installation.

For handling the rotor blade 22 of a wind turbine, the blade holding device 100 according to embodiments herein may be maneuvered towards the side of a rotor blade 22 by means of a lifting device such as a crane (not shown in the figure). Approaching a rotor blade form the side may facilitate clamping the rotor blade if the space directly above the rotor blade is limited. The lifting device may have positive control over the blade holding device 100 at all times. In the embodiments described herein, the blade holding device 100 may be aligned parallel with the rotor blade, thus the longitudinal axis of the blade holding device 100 and the longitudinal axis of the rotor blade 22 may be aligned parallel with respect to one another. Workers (not shown in the figure) may accompany or guide the blade holding device 100 to the rotor blade 22, typically sideways along the central horizontal plane of the rotor blade 22.

According to embodiments herein, once the inner gripper 110 and the outer gripper 140 have securely clamped the rotor blade 22, the rotor blade 22 may be lifted out of the transport fixtures 210 and 220. Optionally, as will be explained in more detail below, the blade holding device and the rotor blade may be calibrated before or shortly after hoisting the rotor blade.

Fig. 7 shows the alignment of the blade holding device 100 with a rotor blade 22 according to embodiments herein. The rotor blade 22 may be lifted from transport fixtures 210 and 220 (shown in Fig. 6) just enough to be suspended freely, without risk of, for instance, bumping into the transport fixtures or transport vehicle. However, before hoisting the rotor blade 22, it is usually calibrated for horizontal lifting. The calibration of the blade holding device 100 with respect to the rotor blade 22 usually accounts for clamping or gripping tolerance between at least one of the inner gripper 110 and outer gripper 140, and the rotor blade 22.

Normally, using the blade holding device according to embodiments described herein ensures that the centers of gravity of the blade holding device and the rotor blade automatically align. The center of gravity 230 of the blade holding device 100 and the center of gravity 240 of the rotor blade 22 are aligned along the same vertical axis 250 and in the same plane one on top of the other. The aforementioned plane is typically parallel to the longitudinal axis of the blade holding device and rotor blade.

Usually, the hoisting point 200, for hoisting the rotor blade 22 via the blade holding device 100 may be positioned along the same axis 250 and in the same plane in order to also be aligned with the centers of gravity 230 and 240 of the blade holding device 100 and the rotor blade 22, respectively. Thus, the resulting loads at the side of the inner gripper and the side of the outer gripper of the spreader are generally equal.

During a calibration process the center of gravity 230 of the blade holding device 100 may be aligned with the center of gravity 240 of the rotor blade 22 to account for any gripping or blade tolerances. For instance, blade tolerances may arise from dirt or debris on the rotor blade, which may shift the center of gravity of a rotor blade. Further, over time deformations of a rotor blade due to aerodynamic loading may also shift the center of gravity of rotor blades. Thus, calibrating the blade holding device and the rotor blade such that the centers of gravity align may ensure a safe and secure handling of any rotor blade.

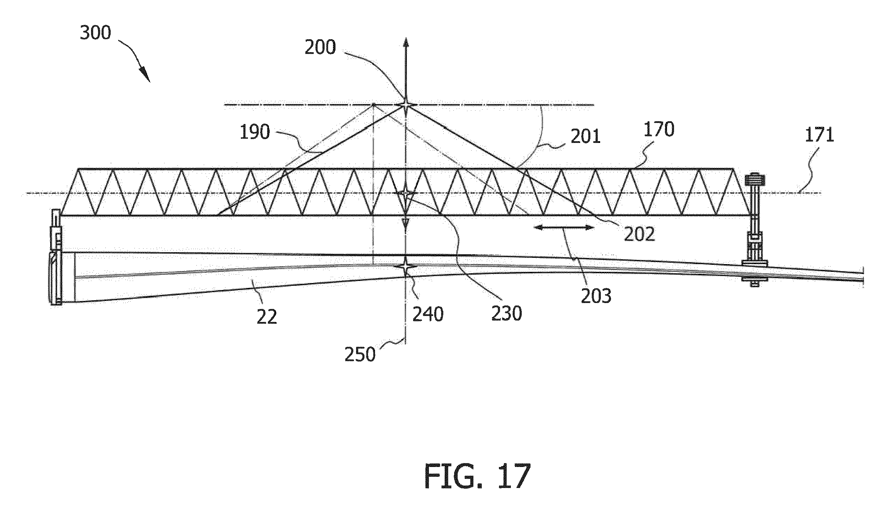

The hoisting means (such as a chain set) may be adjustably attached to the spreader 170 and thus allow for the above-mentioned calibration procedure (e.g. see Fig. 17). The attachment points between the adjustable hoisting means and the spreader of a blade holding device may be adapted to be moveable in the longitudinal axial direction 171 of the spreader 170 (e.g. see Fig. 17). Alternatively or in addition thereto, the attachment points may also be moveably in a non-axial direction of the spreader 170.

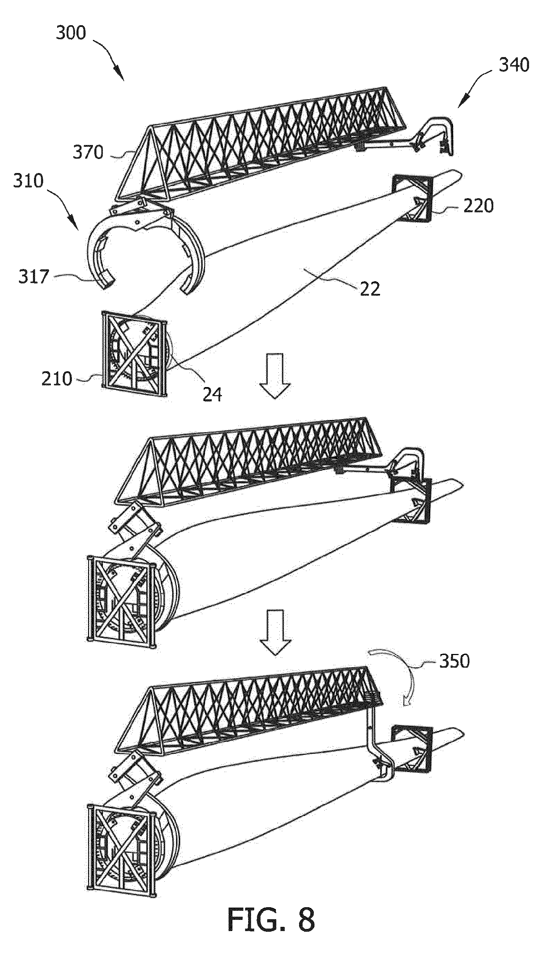

Fig. 8 shows the gripping of a rotor blade 22 attached to a root fixture 210 and tip fixture 200 with a blade holding device 300 according to embodiments herein. The blade holding device 300 includes an inner gripper 310 (first device), which grips a root portion 24 of the rotor blade 22. Further, in the exemplary embodiment shown in Fig. 8, the blade holding device 300 includes an outer gripper 340 (second device) for supporting and optionally gripping the rotor blade 22. In embodiments described herein, the outer gripper 340 grips the rotor blade somewhere between the center of gravity and tip of the rotor blade. Starting out from the root portion of that rotor blade, the outer gripper may grip the rotor blade anywhere between 1/2 and 2/3 the length of the rotor blade. Optionally, at least one of the inner gripper or outer gripper may include one or more pressure pads 317, which may help to securely grip the rotor blade.

According to embodiments herein, the blade holding device 300 shown in Fig. 8 includes a spreader 370 to which the inner gripper 310 and outer gripper 340 are connected. The inner gripper 310 and outer gripper 340 may be moveably connected to the spreader 370. The root and outer grippers may be connected to the ends of the spreader, even though they may also be connected anywhere along the axial length of the spreader.

In embodiments herein, the spreader, root and outer gripper may be transported to the wind turbine site as separate parts and then assembled on site using a single crane. This allows the blade holding device to be easily transported from one site to another.

In further embodiments herein, the spreader (e.g. a truss) may include a modular structure, which may, for instance include three distinct sections. At least one of these sections may be replaceable with a section of a different length to enable lifting rotor blades of different lengths. For example, the root section and the mid-section of the spreader may be the same length irrespective of the length of the rotor blade. However, the tip section of the spreader may be chosen to fit the particular length of the rotor blade in question. In further embodiments herein, the spreader may be designed to be telescopically adjustable in its axial length. Thereby, the same spreader may be adjustable to rotor blades of different lengths without exchanging any parts of the spreader.

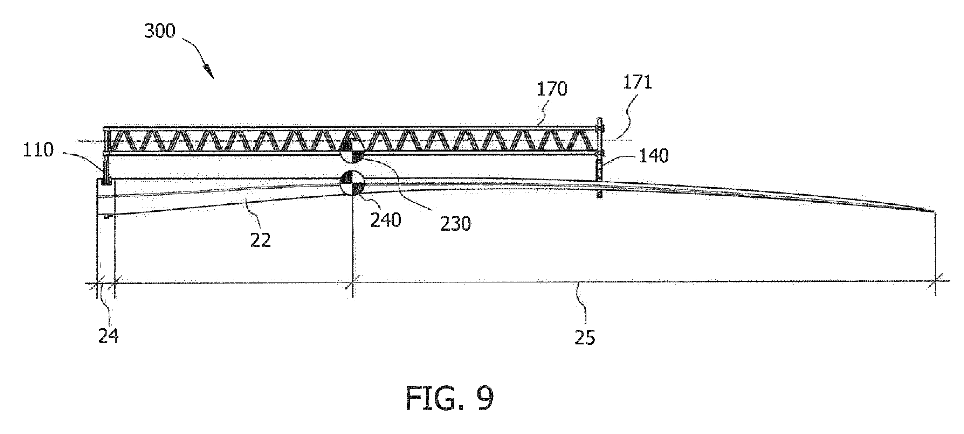

Fig. 9 shows a blade holding device 300 holding a rotor blade 22 including a spreader 170 according to embodiments described herein. The length of the spreader may be determined by the length of the rotor blade to be handled by the blade holding device. However, the spreader may have a length that is at least equal or greater than the distance between the root portion 24 of the rotor blade and the center of gravity of the rotor blade 240. For example, the spreader may have a total length from 10 m to 50 m, in particular from 20 m to 40 m, e.g. the spreader may have a length of 30 m (for rotor blades with a length of 48.7 m) or 32 m (for rotor blades with a length of 58.7 m).

As shown in Fig. 9, the spreader 170 of a blade holding device according to embodiments described herein may have a length, which allows the first device 110 (inner gripper) to grip the root portion 24 of the rotor blade 22 and the second device 140 (outer gripper) to support or grip the rotor blade 22 in an outer portion 25 of the rotor blade 22. According to embodiments described herein, the second device may, for example, support or grip the rotor blade at a position 2/3 the axial length of the rotor blade starting from the end of the rotor blade, which connects the rotor blade to the rotor hub of a wind turbine.

With respect to Fig. 8, the blade holding device 300 may approach the root blade 22 by, for instance, lowering the hook of a crane (not shown in the figure) from which the blade holding device 300 is suspended. Normally, the inner gripper 310 then grips the root portion 24 of the rotor blade from its open position vertically above the rotor blade 22. Thereafter, the outer gripper 340 swings downward 350 from its open position above the rotor blade to grip a tip section of rotor blade 22. The outer gripper may be rotatable around the longitudinal axis of the spreader 370 in a circular motion by 360° and may thus swing down from an open position at an angle, for example, anywhere from 0° to 160° from vertical (e.g. from 90°).

Typically, first the root portion of a rotor blade may be gripped by the inner gripper followed by the outer gripper gripping the tip of the rotor blade. In further embodiments described herein, both the inner gripper and the outer gripper may grip the respective root portion or tip of the rotor blade at the same time.

Similarly to the embodiment shown in Fig. 3, the blade holding device 300 may be suspended from a lifting machine via hoisting means such as chains (not shown in the figure). The lifting machine may then raise or lower the blade holding device 300 and rotor blade 22 using a single hoisting point. In embodiments described herein, the hoisting means may be adjustably connected to the spreader of the blade holding device. Particularly, the attachment points of the hoisting means to the spreader of a blade holding device may be adjusted before or whilst handling a rotor blade. For the purpose thereof, the spreader may include specialized rails (not shown in the figure), which may, for instance, allow attachment means (e.g. attachment lugs) for the lifting chains to slide along the axial length of the spreader and be fixed at a predetermined position.

The centers of gravity of the rotor blade and the blade holding device may need to be vertically aligned before hoisting. Re-adjusting the attachment points of the hoisting means on the spreader of a blade holding device according to embodiments herein allows correcting for any gripping tolerance of the root and outer gripper with respect to the rotor blade. Adjustable hoisting means may facilitate calibrating the blade holding device and rotor blade for a safe and well-balanced horizontal hoisting of the rotor blade.

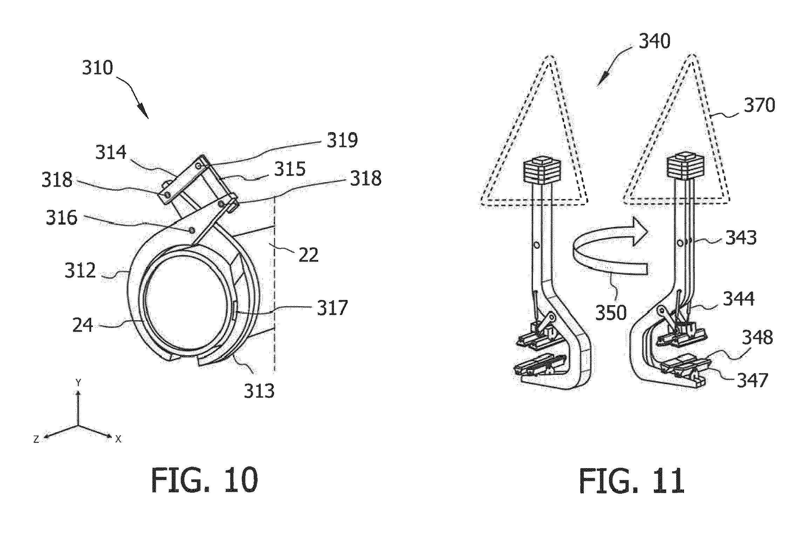

Fig. 10 shows the inner gripper 310 of Fig. 8 according to embodiments herein. Inner gripper 310 includes a first multi-jointed arm 312 and a second multi-jointed arm 313 interconnected to each other via two pivots 316 and 319. The first multi-jointed arm 312 includes a beam 314 that connects multi-jointed arm 312 rotatably to a spreader. The second multi-jointed arm 313 includes a beam 315 that connects multi-jointed arm 313 rotatably to a spreader. Both multi-jointed arms 312 and 313 are connected to a spreader via pivot 319.

According to embodiments herein, inner gripper 310 may be moveable in the x, y, and z directions with respect to a spreader. For instance, in embodiments described herein, inner gripper 310 may hang from a spreader, thus making it free to turn about x, y and z axis. This high degree of mobility may facilitate a precise and easy gripping of rotor blades.

Inner gripper 310 may be adapted to grip a rotor blade and clamp the rotor blade using a clamping force that results from the weight of the rotor blade itself. According to embodiments described herein, inner gripper 310 may be considered as a mechanical restraint device that is adapted to use the weight of the rotor blade as clamping force to automatically clamp the root portion of a rotor blade via a form closure. In case of hydraulic failure, the rotor blade may therefore still remain gripped securely by inner gripper 310, which may thus act as fail-safe mechanism. This increases the operational safety of the blade holding devices described herein. In further embodiments described herein, an outer gripper may also include a fail-safe mechanism as described above.

In embodiments herein, inner grippers and outer grippers may optionally further include a hydraulic locking and unlocking mechanism, which may assists the positive locking mechanism and help to grip and release a rotor blade from a blade holding device.

According to embodiments herein, inner gripper 310 may further include pressure pads 317 that may provide padding between inner gripper 310 and the root of the rotor blade, and may help to distribute clamping forces around the surface of a rotor blade, thus helping to secure the rotor blade in a fixed position. Pressure pads may also sense clamping forces and provide feedback to the operator of the blade holding device.

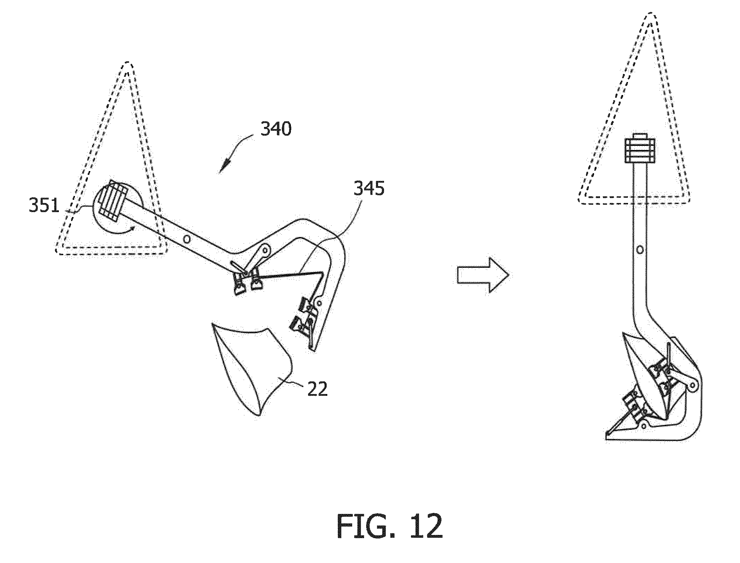

Fig. 11 and Fig. 12 show the outer gripper 340 of Fig. 8 according to embodiments herein. The outer gripper 340 may include a hook 343 adapted for supporting the tip of a rotor blade. The outer gripper 340, usually also includes a hydraulic clamping mechanism 344 adapted to clamp the tip of a rotor blade in order to fix it in a particular position. According to embodiments herein, the outer gripper may include replaceable gimbal-mounted pressure pads 347 that permit easily gripping the tip of differently shaped rotor blades. The pressure pads 347 may include specialized replaceable material 348 such as rubber and polymers, which may ensure a safe grip of the outer gripper 340 on the rotor blade.

In embodiments described herein, the outer gripper 340 may be connected to a corresponding tip portion of the spreader 370 of a blade holding device 300 (e.g. see Fig. 8). Usually, the outer gripper 340 is adapted to be rotatable 350 around its longitudinal axis in order to accommodate a tip down position and thus enable the outer gripper 340 to grip the tip of a rotor blade either from its front or back edge (see Fig. 11). Further, outer gripper 340 is usually adapted to be rotatably 351 connected to the spreader 370 of a blade holding device 300 (see Fig. 12). This, for instance allows outer gripper 340 to grab the tip of a rotor blade by, for instance, swinging from a horizontal starting position under the leading edge of the rotor blade.

According to embodiments described herein, at least one of the inner gripper and outer gripper include a clamp or grip guiding mechanism. This guiding mechanism may function as reference for pressure exerting means (e.g. pressure pads) to exert pressure on the right location of a rotor blade. In embodiments herein, the grip guiding mechanism 345 may be a sling, which guides the pressure pads 347 to the surface of rotor blade 22.

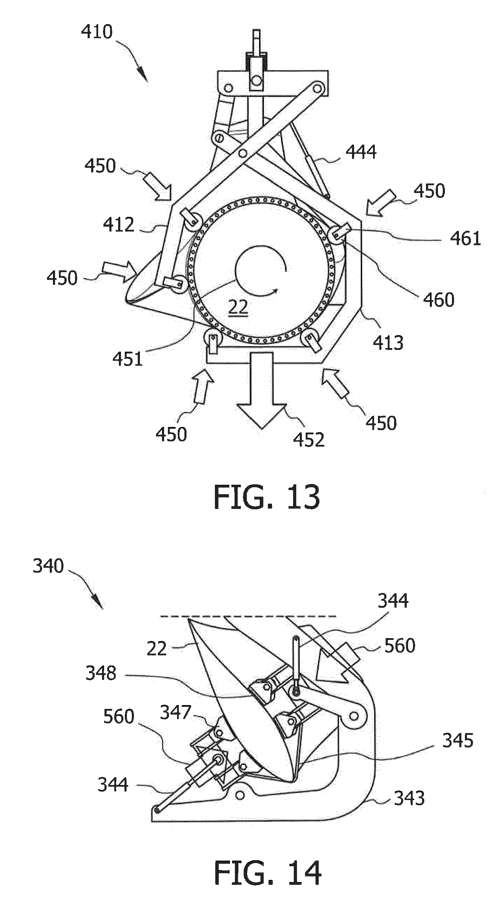

Fig. 13 shows a part of a blade holding device according to embodiments herein. Inner gripper 410 is shown in a closed conformation, gripping a rotor blade 22 with its multi-jointed arms 412 and 413. Inner gripper 410 may include a hydraulic mechanism 444 that facilitates gripping rotor blade 22. Further, inner gripper 410 is adapted to exert a clamping force on a rotor blade using the weight of the rotor blade itself. Usually, under the influence of gravity the weight of a rotor blade exerts a downward force 452 towards the earth's surface. The inner gripper is adapted to take advantage of the downward force 452 to exert a clamping force 450 on rotor blade 22.

In embodiments herein, the clamping force 450 may be exerted on the rotor blade 22 via a roller system 460, for instance, including five rollers. Roller system 460 may enable rotor blade 22 to be rotatable 451 around its longitudinal axis when inner gripper 410 is in a closed conformation gripping rotor blade 22. According to embodiments described herein, the roller system may include any number of rollers such as three, four, five, six or more. The rollers are usually arranged to be evenly distributed around the circumferential surface of a rotor blade gripped by the blade holding devices described herein.

Wind may impact on the surface of a rotor blade causing the rotor blade to rotate involuntarily or causing the blade holding device and rotor blade to sway excessively. Furthermore, wind may exert lift and down forces on a rotor blade. Thereby, the center of gravity of the rotor blade may be shifted, which may dis-equilibrate the blade holding device, which is generally self-aligning and equilibrated by gripping the root portion of a rotor blade. Rotating the rotor blade using a roller system described herein may allow a rotor blade to be rotated whilst gripped by the blade holding device, thereby reducing the surface area of the rotor blade exposed to impending wind and thus stabilizing the blade holding device and rotor blade. Rotating the rotor blade may also reduce or eliminate lift and down forces caused by wind, thus shifting the center of gravity of a rotor blade back to its normal position.

The rotor blade may be rotated around its longitudinal axis whilst being gripped and stabilized by the blade holding device in order to align the center of gravity of the blade holding device with the center of gravity of the rotor blade such that the centers of gravity are aligned vertically above one another. This may enable the blade holding device according to embodiments herein to handle rotor blades even in weather conditions with high wind speeds (e.g. winds speeds of 10 m/s, 12 m/s and even 14 m/s).

According to embodiments herein, the inner gripper may include a locking mechanism 461 that may fix a rotor blade in predetermined position. The locking mechanism may prevent the rotation of a rotor blade around its longitudinal axis of rotation. The locking mechanism may be integrated in the roller system. However, the locking mechanism may also be separate from the roller system in order, for instance, to ease the exchange of a faulty locking mechanism or part of the roller system without disrupting the integrity or having to take out a functional part of either of these systems. The outer gripper of a blade holding device according to embodiments herein may also include a roller system and locking mechanism as described above.

Fig. 14 illustrates a more detailed schematic view of the outer gripper 340 shown in Fig. 8, Fig. 11 and Fig. 12 according to embodiments herein. Outer gripper 340 may include a hook 343 to which a hydraulic mechanism for exerting a clamping force on rotor blade 22 is connected. Usually, the hydraulic mechanism includes one or more remotely controllable hydraulic arms 344, which are adapted to exert, for instance, forces 560 in opposite direction to one another to securely clamp the tip of a rotor blade in the blade holding device.

Gimbal-mounted pressure pads 347 including, for instance, slip resistant linings 348 may be part of the clamping mechanism and function as a moveable unit with hydraulic arms 544 to clamp the rotor blade into a fixed position. A plurality of gimbal-mounted pressure pads that are easily replaceable may help to distribute the clamping force on the surface of the rotor blade.

In embodiments described herein, the guiding mechanism 345 may be a sling which acts as a reference for the pressure pads 347 to automatically be positioned in the correct location on the surface of rotor blade 22. In embodiments herein, the sling may be positioned between and attached to two hydraulic arms 344 of the outer gripper 340 arranged to exert a clamping force on the rotor blade 22 in opposite direction. Thereby, the guiding mechanism may interact with the rotor blade before the rotor blade is clamped or gripped by the pressure pads 347. The pressure pads are automatically guided to the surface of a rotor blade without the need for remote control or any sensor based calculations. Thus, production costs of the blade holding device according to embodiments described herein may be kept relatively low.

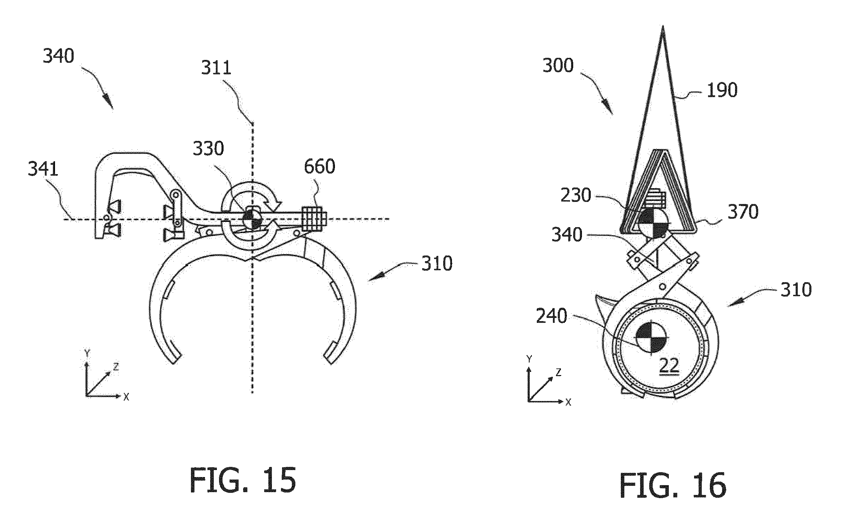

Fig. 15 shows an inner gripper 310 and an outer gripper 340 according to embodiments herein. Both the root 310 and outer gripper 340 are shown in an open conformation. In the open conformation the longitudinal axis 341 of the outer gripper may be perpendicular to the longitudinal axis 311 of the inner gripper 310. However, in a closed conformation whilst gripping or supporting a rotor blade, the longitudinal axes of both the inner gripper and outer gripper may be parallel to each other.

Usually, according to embodiments herein, the outer gripper includes a counterweight 660 which ensures that the center of gravity 330 of the outer gripper 340 remains in the same position whilst the outer gripper 340 transitions from an open to a closed conformation. The counterweight may warrant that the center of gravity of the outer gripper remains in a fixed position even when swinging the outer gripper from an open to a closed conformation.

According to embodiments herein, the inner gripper 310 may remain symmetric when transitioning from an open to a closed conformation. The inner gripper may not require counterweights to keep its center of gravity in the same position and may thus remain symmetric with reference to the y and z planes when transitioning from the open to the closed conformation.

The center of gravity 330 of the outer gripper 340 may be aligned along the longitudinal axis 311 of the inner gripper 310. Further, the center of gravity of the inner gripper 310 is located along in its longitudinal axis 311 and thus lined up directly over the center of gravity 330 of the outer gripper 340.

Fig. 16 shows a blade holding device 300 and a rotor blade 22 according to embodiments herein. The blade holding device 300 may be suspended from a lifting machine (not shown in the figure) via hoisting means 190. Usually, the center of gravity 230 of the blade holding device 300 is directly over the center of gravity 240 of the rotor blade 22 along two axes. The centers of gravity of both the inner gripper 310 and the outer gripper 340 in the closed conformation may also be directly over or above the center of gravity 240 of the rotor blade 22. This ensures a very stable and safe handling of rotor blades using the blade holding devices described herein.

Fig. 17 shows the blade holding device 300 holding a rotor blade 22 according to embodiments herein. Usually the center of gravity 230 of the blade holding device 300 may be aligned along the same vertical axis 250 as the center of gravity 240 of the rotor blade 22. The hoisting point 200 may also be aligned along the aforementioned axis 250 such that both centers of gravity 230 and 240 of the blade holding device 300 and rotor blade 22 respectively, and the hoisting point 200 are directly above one another.

To account for any gripping tolerances of the blade holding device 300, the blade holding device 300 may be calibrated by, for instance, adjustable hoisting means 190. In particular, the attachment points 202 of the hoisting means 190 on the blade holding device 300 may be hydraulically adjustable. The attachment points 202 may be adjustable in the longitudinal axial direction 171 of the spreader 170 (see arrow 203 in Fig. 17). For instance, the blade holding device described herein may be suspended by 4 chains. At the interface with the blade holding device, these chains may form attachment points with a distance of 18.5 m between at least two of these attachment points.

Calibrating the blade holding device that is gripping a rotor blade may change the location of the hoisting point and thus balance out the blade holding device for securely lifting the rotor blade of a wind turbine. The calibration process may occur as soon as the rotor blade is suspended from the blade holding device, i.e. as soon as the blade holding device carries the entire weight of the rotor blade. In embodiments herein, the hoisting point may also be adjusted to purposefully tilt or incline the blade holding device and rotor blade in order to facilitate its assembly to or dis-assembly from the rotor hub of a wind turbine.

In embodiments described herein the angle 201 from horizontal of the hoisting means 190 (i.e. the angle from horizontal between the hoisting point 200 and attachment points 202 on the blade holding device 300) may be adjusted anywhere from 35° to 75°, such as for instance from 45° to 65° or specifically from 50° to 60°. Usually, this angle from horizontal is not below 30°. Typically, adjusting the hoisting angle may further increase the stability when handling rotor blades using the blade holding devices described herein.

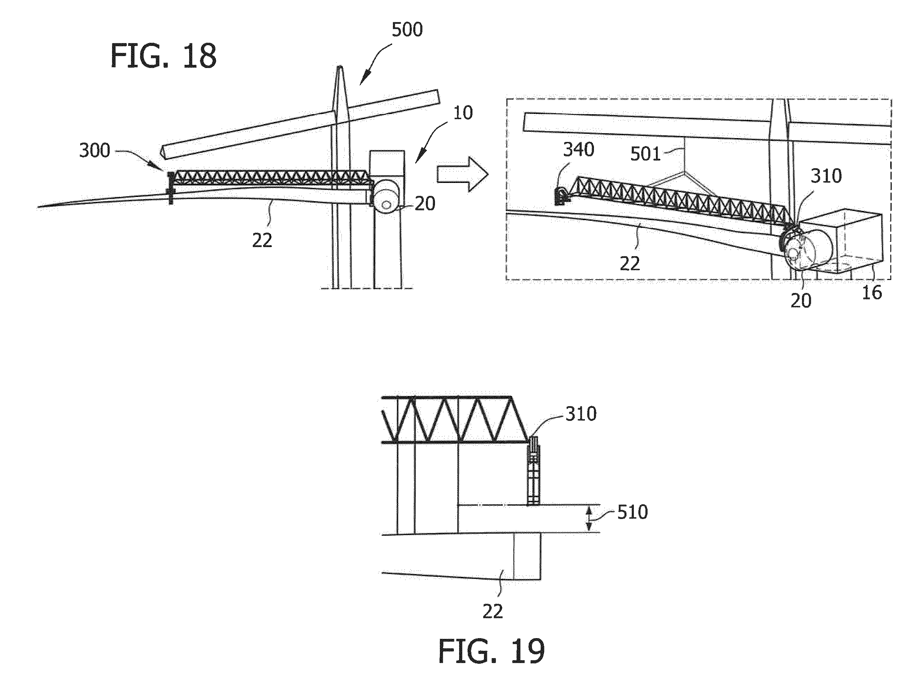

Fig. 18 shows part of the process for installing a rotor blade 22 to the hub 20 of a wind turbine 10 according to embodiments herein. The lifting system may include a lifting machine, such as a crane 500 that may hoist a rotor blade 22 that is gripped by a blade holding device 300. Usually, the blade holding device 200 may be suspended from the crane 500 via a tag line 501. Typically, after connecting the rotor blade 22 to rotor hub 20 in a horizontal position, the inner gripper 310 and outer gripper 340 of the blade holding device 300 may open to release the rotor blade 22, which now remains fixed to the nacelle 16 of a wind turbine via rotor hub 20. Thereafter, the blade holding device 300 may be retracted from the rotor blade 22.

As is shown in Fig. 19 according to embodiments herein, the clearance 510 between the inner gripper 310 and the rotor blade 22 may be at least 1 m. This ensures that the blade holding device does not bump into the rotor blade during and after release. The blade holding device 300 may be remote controlled, which facilitates a fast and safe installation or de-installation of rotor blades.

The method for handling the rotor blade of a wind turbine according to embodiments herein may include gripping the root portion of a rotor blade and supporting an outer portion of the rotor blade. Usually, the root portion of the rotor blade is gripped using an inner gripper of the blade holding device described herein. Further, the rotor blade may be supported by an outer gripper of the blade holding device and may optionally be gripped by the outer gripper. The inner gripper may enclose the root portion of a rotor blade and securely clamp the rotor blade. Gripping the rotor blade may include clamping the rotor blade using the force of gravity and weight of the rotor blade.

According to embodiments herein, the method for handling the rotor of a wind turbine may include rotating the rotor blade around its longitudinal axis whilst it is gripped and optionally supported by the blade holding device, for example, in order to shift the center of gravity of the rotor blade or in order to reduce the wind attack surface of the rotor blade (i.e. by reducing the wind attack angle).

In embodiments herein, the method for handling a rotor blade may further include adjusting the position of the hoisting point of the blade holding device. Adjusting the position of the hoisting point may, for example, account for gripping tolerances, which may occur while gripping the root portion or outer portion of a rotor blade using the blade holding device described herein.

In embodiments described herein, the method for handling the rotor blade of a wind turbine may include any one or more of the following steps: providing a blade holding device, lifting the rotor blade using a single lifting system (e.g. a single lifting crane) and adjusting the axial length of a spreader of the blade holding device. Adjusting the axial length of a spreader of the blade holding device may include adjusting the axial length of the spreader to be greater than the distance from the root portion to the center of gravity of a rotor blade.

Exemplary embodiments of systems and methods for handling the rotor blade of a wind turbine are described above in detail. The systems and methods are not limited to the specific embodiments described herein, but rather, components of the systems and/or steps of the methods may be utilized independently and separately from other components and/or steps described herein. For example, the lifting devices are not limited to practice with only the wind turbine systems as described herein. Rather, the exemplary embodiment can be implemented and utilized in connection with many other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A blade holding device for handling the rotor blade of a wind turbine, the rotor blade including a root portion and an outer portion, the blade holding device comprising:
   a first device adapted to grip the root portion of said rotor blade and a second device adapted to support the outer portion of said rotor blade.
2. The blade holding device according to clause 1, wherein said second device is adapted to grip the outer portion of said rotor blade.
3. The blade holding device according to any preceding clause, wherein at least one of said first device and said second device includes a hydraulic mechanism for gripping said rotor blade.
4. The blade holding device according to any preceding clause, further comprising a spreader which said first device and said second device are connected to.
5. The blade holding device according to any preceding clause 4, wherein aid spreader has a length from 10 m to 50 m.
6. The blade holding device according to any preceding clause, wherein said spreader is adjustable in its axial length.
7. The blade holding device according to any preceding clause, wherein at least one of said first device and said second device includes a rigid arm for supporting said rotor blade and an adjustable clamping arm for clamping said rotor blade.
8. The blade holding device according to any preceding clause, wherein said adjustable clamping arm includes a hydraulic mechanism for clamping said rotor blade.
9. The blade holding device according to any preceding clause, wherein at least one of said first device and said second device is adapted to clamp said rotor blade using a clamping force, wherein said clamping force results from the weight of said rotor blade.
10. The blade holding device according to any preceding clause, wherein at least one of said first device and said second device include a roller assembly which allows said rotor blade to be rotatable along its longitudinal axis when held by the blade holding device.
11. The blade holding device according to any preceding clause, wherein at least one of said first device and said second device include a locking mechanism that prevents the rotation of said rotor blade along its longitudinal axis when held by the blade holding device.
12. A lifting system comprising at least one lifting machine, hoisting device and a blade holding device suspended via said hoisting device for handling the rotor blade of a wind turbine, the rotor blade including a root portion and an outer portion, the blade holding device comprising:
   a first device adapted to grip the root portion of said rotor blade and a second device adapted to support the outer portion of said rotor blade.
13. The lifting system according to any preceding clause, wherein at least one of said first device and said second device includes a rigid arm for supporting said rotor blade and an adjustable clamping arm for clamping said rotor blade.
14. The lifting system according to any preceding clause, wherein at least one of said first device and said second device is adapted to clamp said rotor blade using a clamping force, wherein said clamping force results from the weight of said rotor blade.
15. The lifting system according to any preceding clause, wherein said blade holding device further includes a spreader to which said hoisting device is connected.
16. The lifting system according to any preceding clause, wherein said spreader is adjustable in its axial length.
17. The lifting system according to any preceding clause, wherein said hoisting device is adjustably connected to said spreader.
18. A method for handling the rotor blade of a wind turbine, the rotor blade including a root portion and an outer portion, said method comprising:
   gripping the root portion of said rotor blade; and
   supporting the outer portion of said rotor blade.
19. The method according to any preceding clause, wherein supporting the outer portion of said rotor blade includes gripping the outer portion of said rotor blade.
20. The method according to any preceding clause, further comprising rotating said rotor blade around its longitudinal axis whilst it is gripped and supported in order to shift the center of gravity of said rotor blade.

## Claims

1. A blade holding device (100, 300) for handling the rotor blade (22) of a wind turbine (10), the rotor blade (22) including a root portion (24) and an outer portion (25), the blade holding device (100, 300) comprising:
a first device (110, 310, 410) adapted to grip the root portion (24) of said rotor blade (22) and a second device (140, 340) adapted to support the outer portion (25) of said rotor blade (22).

2. The blade holding device (100, 300) according to claim 1, wherein said second device (140, 340) is adapted to grip the outer portion (25) of said rotor blade (22), and wherein optionally at least one of said first device (110, 310, 410) and said second device (140, 340) includes a hydraulic mechanism (114, 144, 344, 444) for gripping said rotor blade (22).

3. The blade holding device (100, 300) according to any of the preceding claims, further comprising a spreader (170, 370) which said first device (110, 310, 410) and said second device (140, 340) are connected to, wherein optionally said spreader (170, 370) has a length from 10 m to 50 m, and wherein optionally said spreader (170, 370) is adjustable in its axial length.

4. The blade holding device (100, 300) according to any of the preceding claims, wherein at least one of said first device (110, 310, 410) and said second device (140, 340) includes a rigid arm (113, 143) for supporting said rotor blade (22) and an adjustable clamping arm (112, 142) for clamping said rotor blade (22), and wherein optionally said adjustable clamping arm (112, 142) includes a hydraulic mechanism (114, 144, 344, 444) for clamping said rotor blade (22).

5. The blade holding device (100, 300) according to any of the preceding claims, wherein at least one of said first device (110, 310, 410) and said second device (140, 340) is adapted to clamp said rotor blade (22) using a clamping force (450), wherein said clamping force (450) results from the weight of said rotor blade (22).

6. The blade holding device (100, 300) according to any of the preceding claims, wherein at least one of said first device (110, 310, 410) and said second device (140, 340) include a roller assembly (460) which allows said rotor blade (22) to be rotatable (451) along its longitudinal axis when held by the blade holding device (100, 300), and wherein optionally at least one of said first device (110, 310, 410) and said second device (140, 340) include a locking mechanism (461) that prevents the rotation (451) of said rotor blade (22) along its longitudinal axis when held by the blade holding device (100, 300).

7. A lifting system comprising at least one lifting machine (500), hoisting device (190, 501) and a blade holding device (100, 300) suspended via said hoisting device (190, 501) for handling the rotor blade (22) of a wind turbine (10), the rotor blade (22) including a root portion (24) and an outer portion (25), the blade holding device (100, 300) comprising:
a first device (110, 310, 410) adapted to grip the root portion (24) of said rotor blade (22) and a second device (140, 340) adapted to support the outer portion (25) of said rotor blade (22).

8. The lifting system according to claim 7, wherein said blade holding device (100, 300) further includes a spreader (170, 370) to which said hoisting device (190, 501) is connected, wherein optionally said spreader (170, 370) is adjustable in its axial length, and wherein optionally said hoisting device (190, 501) is adjustably connected to said spreader (170, 370).

9. A method for handling the rotor blade (22) of a wind turbine (10), the rotor blade (22) including a root portion (24) and an outer portion (25), said method comprising:
gripping the root portion (24) of said rotor blade (22); and
supporting the outer portion (25) of said rotor blade (22).

10. The method according to claim 9, further comprising rotating said rotor blade (22) around its longitudinal axis whilst it is gripped and supported in order to shift the center of gravity (240) of said rotor blade (22), and wherein optionally supporting the outer portion (25) of said rotor blade (22) includes gripping the outer portion (25) of said rotor blade (22).
